# EUROPÄISCHE PATENTSCHRIFT

(11) **EP 0 300 197 B1**
(45) Veröffentlichungstag und Bekanntmachung des Hinweises auf die Patenterteilung: **15.09.1993**
(21) Anmeldenummer: 88109555.8
(22) Anmeldetag: 15.06.1988
(51) Int. Cl.: H01H 11/04, B23K 1/00

(54) **Kontakt zum Hartlöten auf einem Träger mittels Widerstandspressschweissung mittels eines Kurzzeit-Energieimpulses**
Contact for brazing on a support by means of resistance-pressure welding using a short-time energy pulse
Contact à souder par brasage fort sur un support au moyen de soudage par pression par résistance au moyen d'une impulsion d'énergie de courte durée

(30) Priorität: 22.07.1987 DE 3724295
(43) Veröffentlichungstag der Anmeldung: 25.01.1989
(73) Patentinhaber: SIEMENS AKTIENGESELLSCHAFT, 80333 München (DE)
(72) Erfinder: Dederer, Günther, Dipl.-Ing. (FH), D-8034 Germering (DE)

(56) Entgegenhaltungen:
- DE-A- 3 107 665

## Beschreibung

Die Erfindung betrifft einen Kontakt, der mittels einer Widerstandserwärmung auf einem Träger befestigt wird und aus einem Kontaktmaterial oder dem Kontaktmaterial und einem unterlegten Trägerwerkstoff besteht und mindestens eine Schweißwarze aufweist, insbesondere einen Miniaturkontakt, der mittels einer Widerstandserwärmung und eines Kurzzeit-Energieimpulses mit einer Kontaktfeder verbunden wird.

Aus der Druckschrift DE-A-31 07 665, die den Oberbegriff des Anspruchs 1 bildet, ist ein Metallhalbzeug bekannt, das als Träger für elektrische oder elektronische Bauelemente dient. Aus dem Metallhalbzeug kann ein Teil so ausgestanzt werden, daß daraus ein Kontaktfinger entsteht. Das Halbzeug entsteht durch einen Aufbau auf einen bandförmigen Träger. Diese mehrschichtige Anordnung kann durch ein Verbindungsverfahren mittels Widerstandserwärmung für entsprechende elektrische oder elektronische Zwecke, beispielsweise mit einem Relay verbunden werden. Dieses Metallhalbzeug unterscheidet sich jedoch wesentlich von einem Kontakt, der beispielsweise auf eine Blattfeder aufgebracht wird.

Miniaturkontakte, die z.B. durch Widerstandspreßschweißen auf eine Kontaktfeder geschweißt oder auch hartgelötet werden, weisen im Querschnitt eine obenliegende Schicht aus Kontaktmaterial, z.B. bestehend aus durch Kaltverformung gehärtetem Silber, und eine darunterliegende Schicht aus einem Trägerwerkstoff auf, wobei der Trägerwerkstoff zur Ersparnis des hochwertigen Kontaktmaterials einen Teil desselben ersetzt und somit wie ein Träger wirkt. Außerdem weist der Trägerwerkstoff an seiner Unterseite eine Schweißwarze auf, die meist mittig sitzt und während des Verbindungsvorganges zu einer Stromkonzentration an dieser Stelle führt. Ein Kriterium für die Güte eines Kontaktes bzw. seiner Kontaktoberfläche nach dem Verbinden mit einer Kontaktfeder ist die Kontakthärte, die an der Oberfläche vorhanden ist. Bei zu geringer Kontakthärte besteht die Gefahr des Kaltverschweißens zwischen zwei Kontakten. Die Entwicklung, immer kleinere Kontakte herzustellen, um z.B. das Prellverhalten zu minimieren hat dazu geführt, daß vor allem die Höhe der Kontakte immer geringer wurde. Ein Miniaturkontakt hat z.B. eine Kontaktlänge von 1,4 oder 2 mm, eine Breite von z.B. 0,8 mm und eine Höhe von weniger als 0,5 mm. Durch diese konstruktive Gegebenheit besteht durch die bei der Widerstandserwärmung zum Verbinden des Kontaktes mit der Kontaktfeder entstehende Wärme die Gefahr, daß durch Wärmeleitung die Schicht des Kontaktmaterials, die meist durch Kaltverformung gehärtet wird, einen wesentlichen Härteverlust erleidet.

Um diesen Nachteil auszuschalten, wird in einem ersten Schritt mit einem Kurzzeit-Energieimpuls gearbeitet, der kürzer als 5 ms ist. Da durch diesen geregelten Kurzzeit-Energieimpuls in kurzer Zeit die für die Verbindung nötige Energie eingebracht wird, wird die durch Wärmeleitung von der Verbindungsstelle zur Kontaktmaterialschicht geleitete Energie so gering wie möglich gehalten.

In einem zweiten Schritt kann durch Austausch eines Schweißverfahrens, welches eine Verfahrenstemperatur von ca. 1200 ° C in der Verbindungszone bewirkt, durch ein Hartlötverfahren, welches lediglich eine Verfahrenstemperatur von ca. 800° C in der Verbindungszone aufweist, eine weitere Verminderung der Wärmebelastung der Kontaktmaterialschicht erreicht werden.

Mit herkömmlichen Kontakten, die für Hartlötungen vorgesehen sind und die eine ebene flächige Schicht von Hartlot aufweisen, ist jedoch eine Verbindung von Miniaturkontakten mit Kontaktfedern mittels eines Kurzzeit-Energieimpulses nicht möglich, ohne daß größere Kontakthärteverluste auftreten.

Der Erfindung liegt die Aufgabe zugrunde, einen Kontakt so aufzubauen, daß er durch Widerstandserwärmung, insbesondere mittels eines Kurzzeit-Energieimpulses, durch eine Hartlötung mit einer Kontaktfeder verbunden werden kann.

Diese Aufgabe wird erfindungsgemäß dadurch gelöst, daß der Kontakt, bevor er aufgelötet oder aufgeschweißt wird, auf der Seite der Schweißwarze entweder ganz oder teilweise eine Schicht aus Hartlot aufweist, die auf jeden Fall die Schweißwarze bedeckt, wobei die Schweißwarze zusammen mit der Schicht aus Hartlot die Hartlotwarze bilden.

Der im Querschnitt betrachtete Aufbau des Miniaturkontaktes sieht demnach vor, daß unter der Schicht des Kontaktmaterials der Trägerwerkstoff mit seiner zugehörigen Schweißwarze folgt und darunter die Schicht aus Hartlot angesiedelt ist, die meist durch ein Walzverfahren bzw. durch Plattierung aufgebracht wird. Wird ein derartiger Kontakt während einer Widerstandspreßschweißung, mit der Seite, auf der sich das Hartlot befindet, durch eine Schweißkraft auf eine Kontaktfeder gedrückt und zugleich mit einem Kurzzeit-Energieimpuls beaufschlagt, so wird durch den Erwärmungsprozeß, der von der Schweißwarze durch die dort vorhandene Stromdichte bzw. Stromkonzentration ausgeht, das Lot über der Schweißwarze im teigigen Zustand zur Seite gedrückt. Damit weiterhin eine ausreichende Stromkonzentration für den nötigen Stromfluß und eine weitere Widerstandserwärmung erhalten bleibt, ist die Schweißwarze, bestehend aus dem Trägerwerkstoff, unbedingt notwendig. Da durch den Einsatz derartiger Kontakte nicht die Verfahrenstemperatur einer Schweißung, nämlich ca. 1200° C entsteht, bleibt der Trägerwerkstoff mit seiner Schweißwarze in der Ausgangsform erhalten. Das Hartlot wird innerhalb der Zeit eines Kurzzeit-Energieimpulses in den teigigen Zustand versetzt, wird zur Seite hin verdrängt und führt zu einer flächigen Verbindung, wobei die Schweißwarze im Zentrum steht. Beim Einsatz eines Kontaktes mit einer Längswarze reicht diese Verbindungszone über die gesamte Kontaktlänge und hat eine bestimmte Breite, die einen Teil der Kontaktbreite ausmacht und symmetrisch zu beiden Seiten der Warze liegt. Die Höhe der Schweißwarze wirkt in diesem Fall wie ein Abstandshalter, der dafür sorgt, daß kein flüssiges Hartlot zur Seite zwischen Kontakt und Kontaktfeder herausgedrückt wird. Ein zu starkes verflüssigen des Hartlotes wird durch die entsprechende Einstellung der Dauer und der Höhe des Kurzzeit-Energieimpulses bewirkt.

Eine besonders vorteilhafte Ausgestaltung der Erfindung sieht vor, daß die Schicht aus dem Hartlot über annähernd die gesamte Kontaktbreite reicht. Bezogen auf einen Kontakt mit Längswarze bedeutet dies, daß im Querschnitt die Schicht des Hartlotes über die Breite des Kontaktes annähernd gleichmäßige Dicke besitzt. Lediglich zu den Seiten, d.h. an den Kanten des Kontaktes vermindert sich die Schichtstärke des Hartlotes. Eine derartige Ausgestaltung des Kontaktes trägt dazu bei, daß ein seitliches Austreten von flüssigem Hartlot verhindert wird. Ein Kontakt mit einem solchen Aufbau ist einfach herzustellen und ermögliht beim Verbinden mit einem Träger die Herstellung einer großflächigen Verbindungszone.

Derartige Kontakte werden zweckmäßigerweise so hergestellt, daß die Schicht aus dem Hartlot annähernd die gleiche Kontur hat, wie der Trägerwerkstoff mit seiner Schweißwarze. Dies erzielt den Vorteil, daß das Hartlot an der Hartlotwarze, also an der Stelle, wo die Schicht aus Hartlot von der Schweißwarze unterstützt- oder unterlegt ist, durch die von hier ausgehende Erwärmung zuerst fließt, zur Seite weggedrückt wird, die Zwischenräume auffüllt und für einen Wärmetransport zu den außen liegenden noch festen Zonen des Hartlotes sorgt.

Die besten Ergebnisse können mit einer Schichtdicke der Hartlotwarze von ca. 10 µm, entsprechend 0,01 mm, erzielt werden.

Eine weitere vorteilhafte Ausgestaltung der Erfindung sieht vor, daß die Höhe der Schweißwarze in einem bestimmten Verhältnis zur Höhe der Hartlotwarze steht. Ein besonders gutes Verhältnis ist gegeben, wenn die Höhe der Schweißwarze zwischen 10 und 20 % größer ist, als die Höhe der Hartlotwarze.

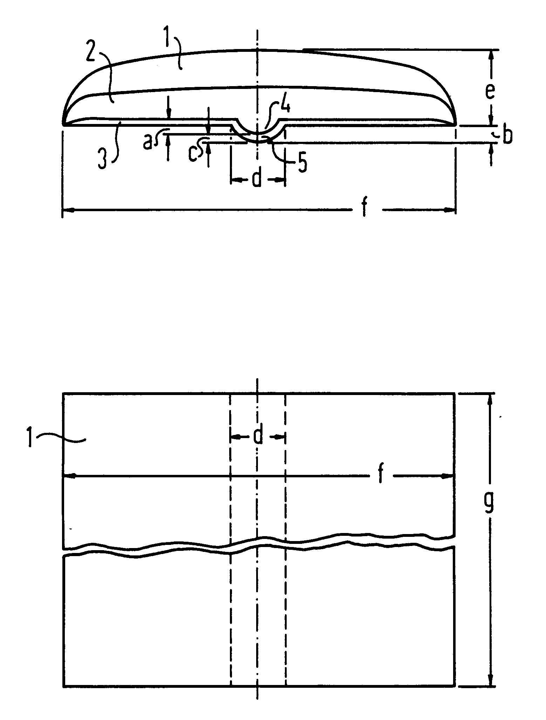

Im folgenden wird anhand der Fig. 1, die schematisch einen Kontakt im Querschnitt und in der Draufsicht darstellt, ein Ausführungsbeispiel gegeben.

Dargestellt ist ein Miniaturkontakt, der aus dem Kontaktmaterial 1 besteht, dem Trägerwerkstoff 2 mit der Schweißwarze 4, dem Hartlot 3 mit der Hartlotwarze 5, wobei die Hartlotschicht über annähernd die gesamte Breite f des Kontaktes geht und zugleich eine ähnliche Kontur wie die Schicht des Trägerwerkstoffes 2 besitzt. Dieser Kontakt weist eine Längswarze mit der Basis-Breite d auf, wobei der Kontakt in der Regel als Band einem Schweißautomaten zugeführt wird und vor dem Verbindungsvorgang in einer Ablängeinrichtung auf die entsprechende Länge g, z.B. 1,4 oder 2,0 mm geschnitten wird. In besonderen Fällen hat der Kontakt auf der Oberfläche des Kontaktmaterials 1 noch eine zusätzliche Schutzschicht in Form eines Edelmetalles, z.B. eine Schutzvergoldung aus AuNi 5. Als Kontaktmaterial 1 wird z.B. Silber verwendet, als Trägerwerkstoff 2 z.B. CuNi 30 Fe und als Hartlot kommen beispielsweise die Lote LAg 15 P5 oder das eutektische Hartlot LAg 72 zum Einsatz. Die Dimensionierung des Kontaktes sieht wie folgt aus:
Die Basis-Breite d der Schweißwarze/Hartlotwarze beträgt 0,1 mm, die Höhe e des Kontaktes ca. 0,15 mm, die Breite f des Kontaktes ca. 0,8 mm und die Länge g des Kontaktes beispielsweise 1,4 oder 2,0 mm. Die Höhe a der Schweißwarze 4, bestehend aus Trägerwerkstoff beträgt in diesem Fall 0,023 mm und ist damit um 15 % höher als die Höhe b der Hartlotwarze 5, die 0,02 mm beträgt. Die Schichtdicke c des Hartlotes in der Hartlotwarze beträgt 0,01 mm.

Durch den Einsatz eines derartigen Miniaturkontaktes in Kombination mit einem Kurzzeit-Energieimpuls für eine Widerstandshartlötung lassen sich die Kontakthärteverluste an der Oberfläche des Kontaktmaterials 1 auf weniger als 15 % reduzieren. Hierbei gehen teilweise die Zeiten für den Energieimpuls ein, die weniger als 5 ms betragen und bis auf 0,8 ms oder sogar darunter abgesenkt werden können. Optimale Ergebnisse hinsichtlich Festigkeit und Kontakthärte werden mit einem Kurzzeit-Energieimpuls von 0,8 ms erzielt. Der Bereich guter Ergebnisse liegt zwischen 0,8 und 1,5 ms. Jede weitere Verlängerung des Energieimpulses würde zu einer weiteren Minderung der Kontakthärte führen. Die Ausbildung des Kontaktes mit abstützender Schweißwarze 4 bestehend aus dem Trägerwerkstoff 2 und der sich anschließenden Schicht aus Hartlot 3 läßt sich auch bei einem Kontaktband mit 2 oder mehr Warzen in Längsrichtung verwirklichen. Weiterhin kann die Form und Anordnung bei anders ausgebildeten Kontakten z.B. durch pyramidenähnliche Warzen in einem Riffelmuster ausgeführt werden.

## Patentansprüche

1. Kontakt, der aus einem Kontaktmaterial (1) oder dem Kontaktmaterial (1) und einem unterlegten Trägerwerkstoff (2) besteht und mindestens eine Schweißwarze (4) zum Verbinden mit einem Träger aufweist, wobei der Kontakt, insbesondere ein Miniaturkontakt, mittels einer Widerstandserwärmung und eines Kurzzeit-Energieimpulses mit einer Kontaktfeder verbunden ist,
**dadurch gekennzeichnet,**
daß der Kontakt vor dem Verbinden auf der Seite der Schweißwarze (4) zumindest teilweise eine Schicht aus Hartlot (3) aufweist, wobei die Schweißwarze (4) von der Schicht aus Hartlot (3) bedeckt ist, so daß die Schweißwarze (4) und die Schicht aus Hartlot (3) zusammen eine Hartlotwarze (5) bilden.

2. Kontakt nach Anspruch 1,
**dadurch gekennzeichnet,**
daß die Schicht aus dem Hartlot (3) über die annähernd gesamte Kontaktbreite (f) reicht.

3. Kontakt nach einem der vorhergehenden Ansprüche,
**dadurch gekennzeichnet,**
daß die Schicht aus dem Hartlot (3) annähernd die gleiche Kontur hat, wie der Trägerwerkstoff (2).

4. Kontakt nach einem der vorhergehenden Ansprüche,
**dadurch gekennzeichnet,**
daß die Schichtdicke (c) der Hartlotwarze (5) ca. 10 µm beträgt.

5. Kontakt nach einem der vorhergehenden Ansprüche,
**dadurch gekennzeichnet,**
daß die Höhe (a) der Schweißwarze (4) zwischen 10 und 20 % größer ist, als die Höhe (b) der Hartlotwarze (5).

## Claims

1. Contact which is composed of a contact material (1) or the contact material (1) and a carrier material (2) underneath it, and has at least one welding stud (4) for connection to a carrier, the contact, especially a miniature contact, being connected to a contact spring by means of resistance heating and a brief energy pulse, characterised in that, before connection, the contact has a layer of silver solder (3) at least partially on the side of the welding stud (4), the welding stud (4) being covered by the layer of silver solder (3) so that the welding stud (4) and the layer of silver solder (3) together form a silver-solder stud (5).

2. Contact according to Claim 1, characterised in that the layer of silver solder (3) extends over approximately the entire contact width (f).

3. Contact according to one of the preceding claims, characterised in that the layer of silver solder (3) has approximately the same contour as the carrier material (2).

4. Contact according to one of the preceding claims, characterised in that the layer thickness (c) of the silver-solder stud (5) is approximately 10 µm.

5. Contact according to one of the preceding claims, characterised in that the height (a) of the welding stud (4) is between 10 and 20% greater than the height (b) of the silver-solder stud (5).

## Revendications

1. Contact constitué d'un matériau de contact (1) ou du matériau de contact (1) et d'un matériau support (2) sous-jacent et d'au moins un bossage de soudure (4) pour la liaison à un support, le contact, qui est notamment un contact miniature, étant relié à un ressort de contact au moyen d'un chauffage par résistance et d'une impulsion d'énergie de courte durée,
caractérisé
en ce que le contact comporte, avant la liaison, du côté du bossage de soudure (4), au moins en partie, une couche en brasure dure (3), le bossage de soudure (4) étant revêtu de la couche en brasure dure (2), de manière que le bossage de soudure (4) et la couche en brasure dure (3) forment ensemble un bossage de brasure dure (5).

2. Contact suivant la revendication 1
caractérisé
en ce que la couche en la brasure dure (3) s'étend sensiblement sur toute la largeur (f) du contact.

3. Contact suivant l'une des revendications précédentes,
caractérisé
en ce que la couche en la brasure dure (3) a sensiblement le même contour que le matériau support (2).

4. Contact suivant l'une des revendications précédentes,
caractérisé
en ce que l'épaisseur (c) de la couche du bossage de brasure dure (5) est de 10 µm.

5. Contact suivant l'une des revendications précédentes,
caractérisé
en ce que la hauteur (a) du bossage de soudure (4) est supérieure de 10 à 20 % à la hauteur (b) du bossage (5) de brasure dure.
